(19) Europäisches Patentamt
European Patent Office
Office européen des brevets

(11) **EP 4 678 306 A1**

(12) **EUROPÄISCHE PATENTANMELDUNG**

(43) Veröffentlichungstag:
**14.01.2026   Patentblatt 2026/03**

(21) Anmeldenummer: **24188456.8**

(22) Anmeldetag: **12.07.2024**

(51) Internationale Patentklassifikation (IPC):
**B21B 45/06** (2006.01)     **B23K 9/025** (2006.01)
**B23K 9/235** (2006.01)     **B23K 10/00** (2006.01)
**B23K 101/16** (2006.01)     **B23K 103/02** (2006.01)

(52) Gemeinsame Patentklassifikation (CPC):
**B23K 26/60; B23K 10/003;** B21B 15/0085;
B21B 45/06; B23K 26/0846; B23K 26/26;
B23K 26/38; B23K 2101/16; B23K 2103/04

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **voestalpine Stahl GmbH**
**4020 Linz (AT)**

(72) Erfinder: **Kern, Carina**
**4020 Linz (AT)**

(74) Vertreter: **Bratovic, Nino Maria**
**Bratovic IP**
**Lissi-Kaeser-Straße 20**
**80797 München (DE)**

(54) **VERFAHREN UND VORRICHTUNG ZUM VERSCHWEISSEN VON STAHLBÄNDERN**

(57)     Die Erfindung schafft eine Vorrichtung und ein Verfahren zum Verschweißen von Stahlbändern (1, 2). Das Verfahren umfasst zumindest die Schritte:
- Zusammenführen (S100), in einem Stumpfstoß, einer ersten Stahlbandkante (7) eines ersten Stahlbands (1) mit einer Zunderschicht (3, 5) und einer zweiten Stahlbandkante (8) eines zweiten Stahlbands (2);
- Bearbeiten (S200) einer Grenzzone (10) um den Stumpfstoß an mindestens einer Oberfläche (A1, A2) des ersten Stahlbands (1) und des zweiten Stahlbands (2) mittels mindestens eines Plasmabrenners (111-116), um die Dicke der Zunderschicht (3, 5) zu verringern; und
- Verschweißen (S300) der ersten Stahlbandkante (7) und der zweiten Stahlbandkante (8) entlang des Stumpfstoßes von der mindestens einen Oberfläche (A1, A2) her mittels eines Schweißkopfs (121);
wobei das Bearbeiten (S200) der Grenzzone (10) zumindest teilweise gleichzeitig mit dem Verschweißen (S300) erfolgt.

Fig. 3

EP 4 678 306 A1

**Beschreibung**

Technisches Gebiet

Die vorliegende Erfindung betrifft ein Verfahren zum Verschweißen von Stahlbändern, insbesondere zu einem Endlosband, und eine entsprechende Vorrichtung.

Technischer Hintergrund

In Stahlwalzwerken werden typischer Weise einzelne Stahlbänder an ihren Enden zu einem so genannten "Endlosband" verschweißt, welches dann weiter verarbeitet, zum Beispiel kaltgewalzt, werden kann. Das Endlosband ist so benannt, weil innerhalb der Kaltwalzanlage ein scheinbar endloses Band bearbeitet wird, an welches vor dem Kaltwalzen jeweils neue Stahlbänder angeschweißt werden. Nach dem Kaltwalzen wird das Endlosband an den Schweißnähten wieder aufgetrennt, und die so neu entstehenden Stahlbänder als "Coils" weiter verwendet.

Während des Kaltwalzens müssen die Schweißnähte großen Belastungen standhalten, da ein unbeabsichtigtes Auftrennen des Endlosbandes (z.B. aufgrund eines Schweißnahtrisses) innerhalb der Kaltwalzanlage eine lange und daher sehr kostenaufwändige Fehlerbehandlung erfordert, bis wieder ein intaktes Endlosband hergestellt und in die Kaltwalzanlage eingefädelt ist. Dementsprechend werden hohe Anforderungen an die Güte des Schweißvorgangs gestellt.

Je nach Anlage können die Stahlbänder vor dem Schweißen gebeizt sein, was das Schweißen vereinfacht, oder ungebeizt sein und somit nach dem Warmwalzen mit einer Zunderschicht behaftet, also verzundert, sein. Das Verschweißen von verzunderten Stahlbändern bringt zusätzliche Herausforderungen mit sich, da die Zunderschicht ungünstig und teilweise unvorhersehbar mit dem Schweißprozess interagiert.

Eine typische Maßnahme wäre es, die Zunderschicht vor dem Schweißen mechanisch zu entfernen, etwa abzuschleifen. Bei einem solchen Prozess entstehen jedoch Metallspäne, welche das Band beschädigen können. Die gezielte, vollständige und problemfreie Abführung solcher Metallspäne ist sehr aufwändig. Einerseits muss zudem das mechanische Entzundern möglichst nah am Schweißprozess durchgeführt werden, andererseits sind auch gerade die Schweißanlagen, die sich über die Bandbreite bewegen müssen, sehr empfindlich gegen solche Metallspäne.

Zusammenfassung der Erfindung

Nach dem oben Gesagten besteht somit ein Bedarf nach einem verbesserten Verfahren, und einer verbesserten Vorrichtung, zum Verschweißen von Stahlbändern, insbesondere zu einem Endlosband.

Eine Lösung wird durch die Merkmale der unabhängigen

Patentansprüche bereitgestellt.

Gemäß einem ersten Aspekt stellt die Erfindung ein Verfahren zum Verschweißen von Stahlbändern bereit, umfassend zumindest die Schritte:

- Zusammenführen, in einem Stumpfstoß, einer ersten Stahlbandkante eines ersten Stahlbands mit einer Zunderschicht und einer zweiten Stahlbandkante eines zweiten Stahlbands;
- Bearbeiten einer Grenzzone an dem oder um den Stumpfstoß an mindestens einer Oberfläche des ersten Stahlbands und des zweiten Stahlbands mittels mindestens eines Plasmabrenners, um die Zunderschichten zu konditionieren, insbesondere um die Dicke der Zunderschichten an der mindestens einen Oberfläche zu verringern; und
- Verschweißen der ersten Stahlbandkante und der zweiten Stahlbandkante entlang des Stumpfstoßes von der mindestens einen Oberfläche her mittels eines Schweißkopfs;

wobei das Bearbeiten der Grenzzone zumindest teilweise gleichzeitig mit dem Verschweißen erfolgt.

Es kann auch mehr als ein Schweißkopf vorgesehen sein, beispielsweise einer zum Schweißen des Stumpfstoßes von einer ersten Oberfläche her (z.B. von oben), und einer zum Schweißen des Stumpfstoßes von einer zweiten, gegenüberliegenden Oberfläche her (z.B. von unten). Bei dem Schweißkopf (oder den Schweißköpfen) kann es sich insbesondere um einen Laserschweißkopf eines Laserschweißbrenners handeln. Auch die Anwendung anderer Schweißtechniken ist jedoch denkbar, beispielsweise Widerstandspressschweißverfahren, insbesondere Widerstandsnahtschweißen, beispielsweise Rollnahtschweißen. Dementsprechend kann der Schweißkopf (oder mehrere oder alle Schweißköpfe) auch als Widerstandsnahtschweißkopf, Rollnahtschweißkopf etc. ausgebildet sein.

Mit Oberflächen sollen hierin stets die beiden größten, flächigen Seiten der Stahlbänder gemeint sein, die durch Länge und Breite aufgespannt werden, also nicht etwa die im Verhältnis dazu deutlich kleineren Kanten, die unter Verwendung der Tiefe (d.h. der kleinsten Dimension) der Stahlbänder aufgespannt werden.

Ein Abstand zwischen einer Düse des jeweiligen Plasmabrenners und der jeweiligen Oberfläche, an welcher die Grenzzone bearbeitet wird, kann beispielsweise zwischen 1 mm und 11 Millimeter, insbesondere zwischen 3 mm und 8 mm, beispielsweise 5 mm betragen.

Eine zu verringernde Zunderschicht kann einseitig oder beidseitig am ersten Stahlband, und optional auch einseitig oder beidseitig am zweiten Stahlband vorliegen.

Im dem Fall, dass nur am ersten Stahlband eine zu verringernde Zunderschicht vorliegt, kann die zu bearbeitende Grenzzone einseitig an dem Stumpfstoß angeordnet sein. Weisen beide Stahlbänder eine Zunderschicht an derselben Oberfläche auf, kann die Grenzzone an dieser Oberfläche beidseitig um den Stumpfstoß herum angeordnet sein, beispielsweise symmetrisch darum.

Weisen sowohl das erste als auch das zweite Stahlband eine zu verringernde Zunderschicht an derselben Oberfläche auf (d.h. unmittelbar nebeneinander), erfolgt jegliche Bearbeitung der Zunderschichten vorzugsweise in gleicher Weise für die Zunderschicht des ersten Stahlbands wie auch für die Zunderschicht des zweiten Stahlbands. Beispielsweise erfolgt die Verringerung der beiden Zunderschichten für dieselbe Zeit und/oder für denselben Grad der Verringerung.

Gemäß einigen bevorzugten Ausführungsformen, Varianten oder Verfeinerungen von Ausführungsformen wird das Bearbeiten der Grenzzone mit mindestens derselben Geschwindigkeit entlang des Stumpfstoßes durchgeführt wie das Verschweißen. Das Bearbeiten der Grenzzone beginnt vorteilhaft spätestens mit dem Beginn des Verschweißens, und vorteilhaft früher, z.B. 120 Sekunden oder weniger, bevorzugt 50 Sekunden oder weniger, insbesondere 20 Sekunden oder weniger, besonders bevorzugt 5 Sekunden oder weniger, beispielsweise 1 Sekunde oder weniger vor Beginn des Verschweißens. Auf diese Weise ist sichergestellt, dass das Verschweißen immer auf einer bereits bearbeiteten (z.B. verringerten) Zunderschicht erfolgt.

Gemäß einigen bevorzugten Ausführungsformen, Varianten oder Verfeinerungen von Ausführungsformen umfasst das Verfahren ein Bewegen des mindestens einen Plasmabrenners zum Bearbeiten der Grenzzone und des Schweißkopfs (z.B. eines

Laserschweißbrenners) zum Verschweißen der ersten Stahlbandkante und der zweiten Stahlbandkante gleichförmig mit konstantem Abstand entlang des Stumpfstoßes.

Gemäß einigen bevorzugten Ausführungsformen, Varianten oder Verfeinerungen von Ausführungsformen erfolgt das Bewegen des mindestens einen Plasmabrenners und des Schweißkopfs durch Bewegen eines gemeinsamen Schlittens (oder: Wagens), auf welchem der mindestens eine Plasmabrenner und der Schweißkopf montiert sind. Ist ein Verschweißen von beiden Seiten (also von beiden Oberflächen her, z.B. oben und unten) vorgesehen, kann ein einziger Schlitten vorgesehen sein, an welchem je ein Plasmabrenner für oben und unten und/oder je ein Schweißkopf für oben und unten angeordnet ist, oder es können zwei separate Schlitten vorgesehen sein. Die beiden Schlitten können gleich schnell oder unterschiedlich schnell bewegt werden, und können ortsgleich oder ortsversetzt angeordnet sein. Ist an dem Schlitten auch der Schweißkopf angeordnet, ist dieser auch als Schweißwagen bezeichenbar.

Gemäß einigen bevorzugten Ausführungsformen, Varianten oder Verfeinerungen von Ausführungsformen erfolgt das Verschweißen mit einer Geschwindigkeit von mindestens 2 Meter pro Minute, bevorzugt mindestens 7 Meter pro Minute, besonders bevorzugt mindestens 10 Meter pro Minute, beispielsweise 12 Meter pro Minute oder mehr. Eine schnellere Verschweißgeschwindigkeit wird durch die hierin beschriebene Bearbeitung der Zunderschicht ermöglicht und steigert den Durchsatz des Verfahrens.

Gemäß einigen bevorzugten Ausführungsformen, Varianten oder Verfeinerungen von Ausführungsformen erfolgt das Bearbeiten derart, dass die Zunderschicht des ersten Stahlbands (und optional, falls vorhanden, auch eine Zunderschicht des zweiten Stahlbands jeweils) zwischen 30% und 90%, bevorzugt zwischen 50% und 80%, besonders bevorzugt zwischen 60% und 75%, verringert (oder: reduziert) wird (bzw. werden).

Es hat sich nämlich überraschend herausgestellt, dass die Zunderschicht nicht vollkommen entfernt zu werden braucht, um die Qualität der Verschweißung deutlich zu verbessern. Somit kann Zeit und Aufwand gespart werden, in dem die Zunderschichten nur verringert, nicht jedoch vollständig entfernt werden, was wiederum den Durchsatz des Verfahrens erhöht. Zudem kann sich auf diese Weise auch die Menge von Material oder Partikeln verringern, die ggfs. abgetragen und somit aus der Schweißzone entfernt wird.

Gemäß einigen bevorzugten Ausführungsformen, Varianten oder Verfeinerungen von Ausführungsformen erfolgt das Bearbeiten derart, dass die Zunderschicht des ersten Stahlbands (und optional, falls vorhanden, auch eine Zunderschicht des zweiten Stahlbands jeweils) um eine Dicke zwischen 0,5 Mikrometer bis 15 Mikrometer verringert wird (bzw. werden), bevorzugt um eine Dicke zwischen 1 Mikrometer und 5 Mikrometern, beispielsweise um eine Dicke zwischen 1 Mikrometer und 2 Mikrometern.

Das Verringern von Zunderschichten um x% oder y Mikrometer kann jeweils das Verringern um einen entsprechenden Durchschnittswert über die bearbeitete Grenzzone hinweg bedeuten.

Bevorzugt werden die Zunderschichten der beiden Stahlbänder jeweils in gleicher Art, insbesondere zum gleichen Grad, verringert, obwohl in manchen Varianten auch eine unterschiedlich starke Verringerung der Zunderschichten an den beiden Stahlbändern vorgenommen werden kann.

Gemäß einigen bevorzugten Ausführungsformen, Varianten oder Verfeinerungen von Ausführungsformen liegt zwischen dem Bearbeiten einer Stelle der Grenzzone und deren Verschweißen ein Zeitraum von 120 Sekunden oder weniger, bevorzugt 50 Sekunden oder weniger, insbesondere 20 Sekunden oder weniger, besonders bevorzugt 5 Sekunden oder weniger, beispielsweise 1 Sekunde oder weniger oder weniger.

Gemäß einigen bevorzugten Ausführungsformen, Varianten oder Verfeinerungen von Ausführungsformen wird die Grenzzone an beiden Oberflächen des ersten Stahlbands und des zweiten Stahlbands mit jeweils mindestens einem Plasmabrenner bearbeitet, um die Zunderschichten beidseitig zu bearbeiten, insbesondere beidseitig zu verringern.

Gemäß einigen bevorzugten Ausführungsformen, Varianten oder Verfeinerungen von Ausführungsformen weist die bearbeitbare (d.h. die zu bearbeitende bzw. danach bearbeitete) Grenzzone eine größere Breite (in der longitudinalen Dimension der Stahlbänder) auf als ein Durchmesser einer von dem Schweißkopf bearbeitbaren (d.h. zu bearbeitenden bzw. danach bearbeiteten), also verschweißten, Zone. Bei der von dem Schweißkopf bearbeitbaren Zone kann es sich beispielsweise um einen Durchmesser eines Laserstrahls eines Laserschweißbrenners auf der Grenzzone handeln. Hierdurch wird sichergestellt, dass das Schweißen nur auf zuvor bearbeiteten Bereichen der Stahlbänder erfolgt.

Gemäß einigen bevorzugten Ausführungsformen, Varianten oder Verfeinerungen von Ausführungsformen umfasst das Verfahren außerdem die Schritte:

- Abtrennen eines (im Verfahren insbesondere nachlaufenden, dem zweiten Stahlband zugewandten) Stahlbandendes des ersten Stahlbands zum Erzeugen der ersten Stahlbandkante; und
- Abtrennen eines (im Verfahren insbesondere voranlaufenden, dem ersten Stahlband zugewandten) Stahlbandendes des zweiten Stahlbands zum Erzeugen der zweiten Stahlbandkante.

Das Abtrennen kann beispielsweise mittels einer mechanischen Schere (oder mehrerer mechanischer Scheren) oder mittels eines Schweißgeräts (oder mehrerer Schweißgeräte), beispielsweise eines zum Laserschneiden geeigneten Laserschweißgeräts, erfolgen.

Gemäß einigen bevorzugten Ausführungsformen, Varianten oder Verfeinerungen von Ausführungsformen umfasst das Verfahren weiterhin die Schritte:

- Erfassen von Eigenschaften des ersten Stahlbands und des zweiten Stahlbands;
- Bestimmen, basierend zumindest auf den erfassten Eigenschaften, eines Porositätsmaßes, welches eine Wahrscheinlichkeit für eine Porenbildung beim Verschweißen mit dem Schweißkopf (beispielsweise mittels Laser) angibt, wobei das Porositätsmaß umso höher ist, je mehr Kohlenstoff in der Zusammensetzung des ersten Stahlbands und des zweiten Stahlbands enthalten ist und umso geringer ist, je mehr mindestens eines vorbestimmten Elements in der Zusammensetzung enthalten ist, wobei das mindestens eine vorbestimmte Element Silicium und/oder Aluminium umfasst; und
- Prüfen, ob das bestimmte Porositätsmaß einen vorbestimmten Schwellwert überschreitet.

Bevorzugt wird das Bearbeiten der Grenzzone nur dann durchgeführt, wenn das Prüfen ergibt, dass das bestimmte Porositätsmaß den vorbestimmten Schwellwert überschreitet, und unterbunden, wenn das bestimmte Porositätsmaß den vorbestimmten Schwellwert nicht überschreitet.

Das Erfassen der Eigenschaften des ersten Stahlbands und des zweiten Stahlbands kann beispielsweise ein Erfassen einer jeweiligen Zusammensetzung, ein Erfassen von Prozessparametern von vorangehenden Prozessschritten des Verfahrens oder von Prozessparametern des Erzeugens der Stahlbänder und/oder dergleichen umfassen. Das Erfassen kann ein Auslesen von Werten aus einer Datenbank und/oder ein Messen umfassen. Prozessparameter können beispielsweise Temperaturen, Zeitdauern, Leistungen, oder dergleichen umfassen, etwa eine Zeitdauer, welche das Stahlband in einer Glühe verbracht hat oder dergleichen.

Das mindestens eine vorbestimmte Element kann, außer Silicium und/oder Aluminium, zusätzlich mindestens eines der folgenden Elemente enthalten: Mangan, Niob, Titan, und/oder Chrom.

Insbesondere kann ein Porositätsmaß P beispielsweise wie folgt definiert werden:

$$P = \frac{C}{Si + Al + Mn + Nb + Ti + Cr},$$

wobei die Elementsymbole jeweils für den Massenanteil des jeweiligen Elements in dem Stahlband stehen. Für ein so definiertes Porositätsmäß kann der vordefinierte Schwellwert beispielsweise 0,1 oder größer sein, etwa 0,13 oder größer, insbesondere 0,15 oder größer, beispielsweise 0,15.

Generell ist eine Konditionierung der verzunderten Oberfläche besonders bei niedrig legierten Stahlgüten sinnvoll. Stahlgüten, die nur geringe Gehalte an desoxidierenden Elementen, wie zum Beispiel Aluminium und Silizium aufweisen, neigen beim Laserschweißen zur Bildung von Poren. Gelöster Kohlenstoff aus dem Stahl reagiert mit Sauerstoff, der durch den Zunder eingebracht wird im Schmelzbad z.B. in einem Laserschweißprozess zu CO oder $CO_2$, wenn keine reaktionsfreudigeren Legierungselemente zur Verfügung stehen, gemäß z.B. der Reaktionsgleichung FeO + C -> Fe + CO. Diese CO- oder $CO_2$- Gasblasen werden beim Erstarren des Schmelzbades in der Schweißnaht eingeschlossen und beeinflussen die Verbindungseigenschaften negativ. Außerdem kann Feuchtigkeit auf der Oberfläche der Stahlbänder zu einer Bildung von $H_2$-Poren in der Schweißnaht führen. Die erfindungsgemäße Bearbeitung der Grenzzone bewirkt somit zusätzlich auch ein vorteilhaftes Trocknen der Oberfläche der Stahlbänder in der Grenzzone.

Basierend auf den von dem ersten Stahlband und dem zweiten Stahlband erfassten Eigenschaften kann vorteilhaft auch automatisch ein Parameter des Bearbeitens der Grenzzone eingestellt werden, beispielsweise eine Dauer der Bearbeitung, ein Abstand zwischen einer Düse des Plasmabrenners und der Oberfläche, eine Stromstärke des Plasmabrenners und dergleichen, oder ein Grad der Verringerung der Zunderschicht (entweder relativ in Prozenten oder absolut in Mikrometern). Beispielsweise hängt die Schichtdicke der Zunderschicht vom Silizium-Gehalt in der Zusammensetzung des Stahlbands ab. Ein höherer Siliziumgehalt geht *ceteris paribus* (z.B. bei gleichen Abkühlbedingungen des Stahlbands) mit einer geringeren Zunderschichtdicke einher.

Gemäß einigen bevorzugten Ausführungsformen, Varianten oder Verfeinerungen von Ausführungsformen wird ein weiteres Stahlband bereitgestellt, und nach dem Verschweißen des ersten und des zweiten Stahlbands in einer ersten Iteration des Verfahrens ein Ergebnis des Verschweißens als erstes Stahlband für eine weitere Iteration des Verfahrens und das weitere Stahlband als zweites Stahlband für die weitere Iteration des Verfahrens verwendet. Es versteht sich, dass diese Vorgehensweise immer so weiter geführt werden kann, um ein Endlosstahlband zu erzeugen.

Gemäß einigen bevorzugten Ausführungsformen, Varianten oder Verfeinerungen von Ausführungsformen wird das erste Stahlband in der Grenzzone mittels mindestens eines ersten Plasmabrenners bearbeitet, und das zweite Stahlband in der Grenzzone mittels mindestens eines zweiten Plasmabrenners bearbeitet. Anders ausgedrückte wird der Teil der Grenzzone, welcher zu dem ersten Stahlband gehört, mittels eines ersten Plasmabrenners bearbeitet, und der Teil der Grenzzone, welcher zu dem zweiten Stahlband gehört, mittels eines zweiten Plasmabrenners bearbeitet, bevorzugt ohne einen Überlapp.

Gemäß einigen bevorzugten Ausführungsformen, Varianten oder Verfeinerungen von Ausführungsformen wird die gesamte Grenzzone einerseits (d.h., an einer Oberfläche) des ersten Stahlbands und des zweiten Stahlbands mittels eines einzelnen Plasmabrenners bearbeitet.

Die Erfindung schafft außerdem eine Vorrichtung zum Verschweißen von Stahlbändern, umfassend:

eine Fördereinrichtung, welche dazu eingerichtet ist, eine erste Stahlbandkante eines ersten Stahlbands mit einer Zunderschicht und eine zweite Stahlbandkante eines zweiten Stahlbands mit einer Zunderschicht in einem Stumpfstoß zusammenzuführen;

mindestens einen Plasmabrenner, welcher dazu eingerichtet ist, eine Grenzzone an dem oder um den Stumpfstoß an mindestens einer Oberfläche des ersten Stahlbands und des zweiten Stahlbands zu bearbeiten, insbesondere um die Zunderschichten an der mindestens einen Oberfläche zu verringern (oder: zu reduzieren); und

eine Schweißeinrichtung, welche dazu eingerichtet ist, die erste Stahlbandkante und die zweite Stahlbandkante entlang des Stumpfstoßes von der mindestens einen Oberfläche her zu verschweißen;

wobei der mindestens eine Plasmabrenner und die Schweißeinrichtung derart eingerichtet sind, dass das Bearbeiten der Grenzzone durch den mindestens einen Plasmabrenner zumindest teilweise gleichzeitig mit dem Verschweißen durch die Schweißeinrichtung erfolgt.

Diese Vorrichtung kann zum Durchführen des vorangehend beschriebenen Verfahrens sowie jeder seiner bevorzugten Ausführungsformen, Varianten oder Verfeinerungen von Ausführungsformen angepasst sein und umgekehrt.

Die Schweißeinrichtung kann beispielsweise mindestens eine Laserschweißeinrichtung und/oder eine Widerstandsnahtschweißeinrichtung aufweisen, welche entsprechend mindestens einen Laserschweißkopf bzw. mindestens einen Widerstandnahtschweißkopf (z.B. einen Rollnahtschweißkopf) aufweisen.

Sind mehrere Schweißköpfe vorgesehen, kann die Vorrichtung entweder eine Schweißeinrichtung mit mehreren Schweißköpfen oder mehrere Schweißeinrichtungen mit je einem Schweißkopf, oder eine Mischung davon umfassen.

Weitere vorteilhafte Ausführungsformen, Varianten, und Verfeinerungen von Ausführungsformen ergeben sich aus der nachfolgenden detaillierten Beschreibung unter Bezugnahme auf die Figuren.

Kurze Beschreibung der Figuren

Die Erfindung wird nachstehend anhand von

Ausführungsbeispielen in den Figuren der Zeichnungen näher erläutert. Es zeigen hierbei:

Fig. 1 ein schematisches Flussdiagramm zum Erläutern eines Verfahrens gemäß einer Ausführungsform der vorliegenden Erfindung;

Fig. 2 bis Fig. 6 schematische Situationen zur Illustration von möglichen Varianten des Verfahrens aus Fig. 1;

Fig. 7 ein schematisches Blockdiagramm zum Erläutern einer Vorrichtung gemäß einer weiteren Ausführungsform der vorliegenden Erfindung; und

Fig. 8A bis Fig. 10B schematische sowie experimentell bestimmte Darstellungen von Querschnitten durch Stahlbänder zur Erläuterung des Effekts des erfindungsgemäßen Bearbeitens der Stahlbänder.

In sämtlichen Figuren sind gleiche bzw. funktionsgleiche Elemente und Vorrichtungen - sofern nicht anders angegeben ist - mit denselben Bezugszeichen versehen worden. Die Bezeichnung und Nummerierung der Verfahrensschritte impliziert nicht zwangsläufig eine Reihenfolge, sondern dient der besseren Unterscheidung, obwohl in einigen Varianten die Reihenfolge auch der Reihenfolge der Nummerierung entsprechen kann.

Detaillierte Beschreibung der Figuren

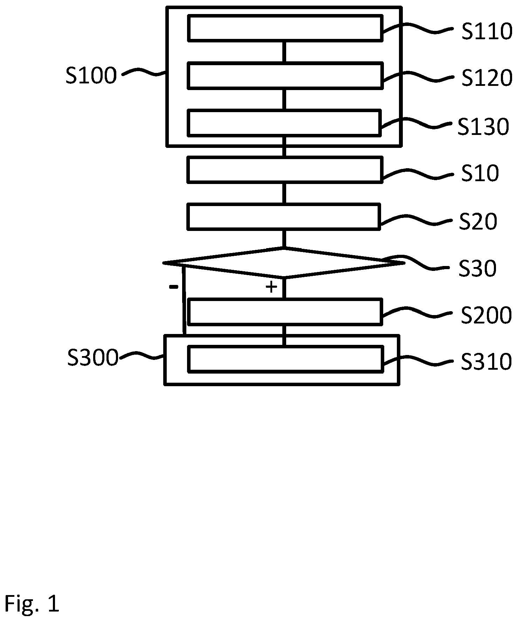

Fig. 1 zeigt ein schematisches Flussdiagramm zum Erläutern eines Verfahrens gemäß einer Ausführungsform der vorliegenden Erfindung, d.h. eines Verfahrens zum Verschweißen von Stahlbändern.

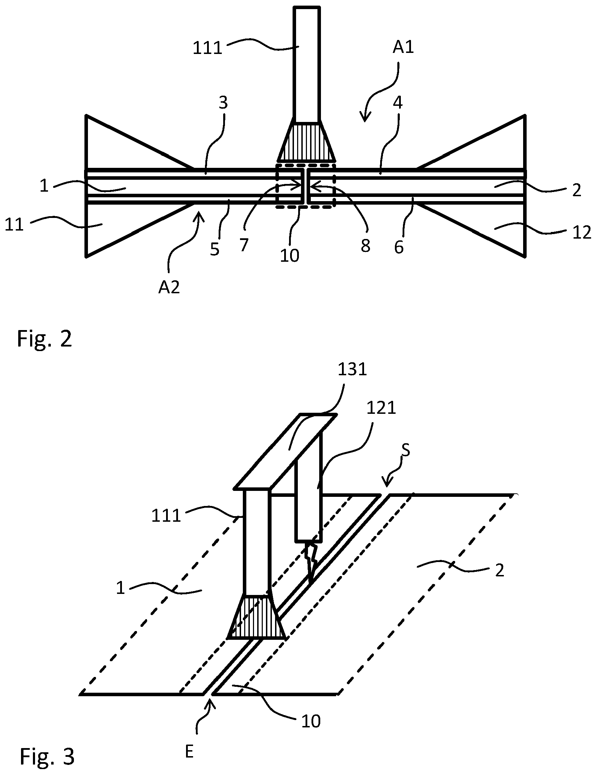

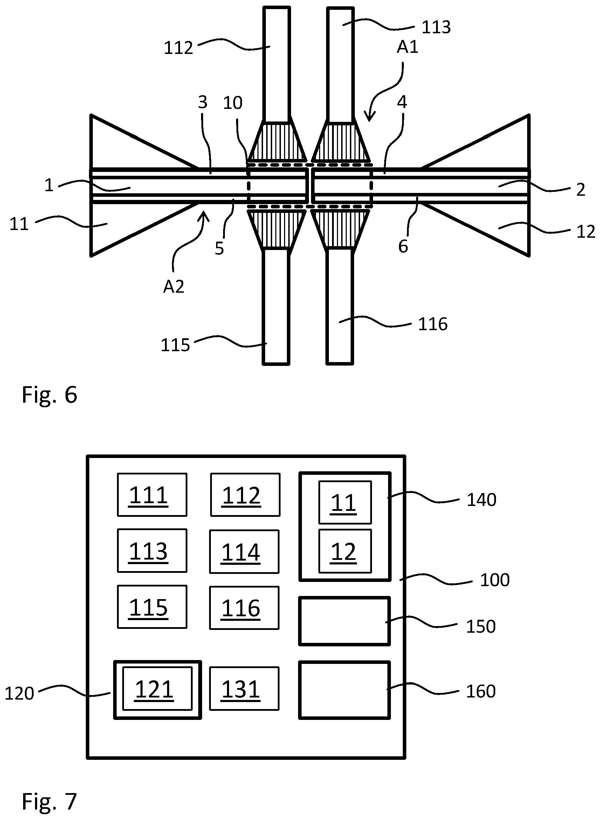

Fig. 2 und Fig. 6 zeigen schematische Situationen zur Illustration von möglichen Varianten des Verfahrens aus Fig. 1, auf deren Bezugszeichen daher im Folgenden auch Bezug genommen werden wird.

In Schritt S100 werden eine ersten Stahlbandkante 7 eines ersten Stahlbands 1 mit einer Zunderschicht 3, 5 und eine zweite Stahlbandkante 8 eines zweiten Stahlbands 2 mit einer Zunderschicht 4, 6 in einem Stumpfstoß zusammengeführt. Typischerweise sind verzunderte Stahlbänder 1, 2 an allen ihren Oberflächen A1, A2 verzundert und weisen somit insbesondere eine erste Zunderschicht 3, 4 an einer (o.B.d.A. definierten) ersten Oberfläche A1 (in Fig. 2 o.B.d.A. die Oberseite) und eine zweite Zunderschicht 4, 6 an einer der ersten Oberfläche A1 gegenüberliegenden zweiten Oberfläche A2 (in Fig. 2 o.B.d.A. die Unterseite) auf.

Wie im Vorangehenden bereits erläutert wurde, kann auch ein verzundertes erstes Stahlband 1 mit einem nicht verzunderten (z.B. gebeizten) Stahlband 2 verschweißt werden (oder umgekehrt, d.h. die Benennung als erstes bzw. zweites Stahlband kann austauschbar sein). Im Nachfolgenden wird beispielhaft vorrangig der Fall beschrieben, dass beide Stahlbänder 1, 2 verzundert sind, insbesondere an beiden Oberflächen A1, A2. Es versteht sich jedoch, dass alle beschriebenen Verfahren und Vorrichtungen auch zum Verschweißen eines verzunderten Stahlbands mit einem nicht verzunderten Stahlband angepasst werden können.

In dem zusammengeführten Zustand können die Stahlbänder 1, 2, beispielsweise durch Klemmen 11, 12 einer Vorrichtung zum Verschweißen von Stahlbändern 1, 2 (insbesondere der hierin beschriebenen erfindungsgemäßen Vorrichtung) fixiert werden.

Das Zusammenführen S100 kann insbesondere ein jeweiliges Fördern S110 der Stahlbänder 1, 2 hin zu einer Trenneinrichtung, beispielsweise einer mechanischen Schere oder eines Schweiß(trenn)geräts, beispielsweise eines zum Laserschneiden eingerichteten Laserschweiß(trenn)geräts umfassen. Alternativ oder zusätzlich kann bzw. können auch die entsprechende Trenneinrichtung, oder mehrere Trenneinrichtungen, bewegt werden.

Daraufhin kann in einem Schritt S120 ein Abtrennen eines Stahlbandendes des ersten Stahlbands 1 zum Erzeugen der ersten Stahlbandkante 7 und ein Abtrennen S130 eines Stahlbandendes des zweiten Stahlbands 2 zum Erzeugen der zweiten Stahlbandkante 8 erfolgen, wobei das erste und das zweite Stahlbandende vorteilhaft einander zugewandt sind, sodass dasselbe dann auch für die erzeugten Stahlbandkanten 7, 8 gilt. Auf diese Weise kann ein präziser und sauberer Stumpfstoß ausgebildet werden. Die Schritte S120 und S130 können gleichzeitig durchgeführt werden (etwa durch zwei separate Trenneinrichtungen) oder nacheinander, wobei zwischen dem Schritt S120 und dem Schritt S130 entweder die Trenneinrichtung, oder mindestens ein Stahlband 1, 2, oder beides bewegt wird.

In einem Schritt S200 wird eine Grenzzone 10 um den Stumpfstoß herum an mindestens einer Oberfläche A1 des ersten Stahlbands 1 und des zweiten Stahlbands 2 mittels mindestens eines Plasmabrenners 111 bearbeitet (oder: konditioniert), insbesondere um die Dicke der Zunderschichten 3, 4 zu verringern (oder: zu reduzieren). In Fig. 2 ist dies für die erste Oberfläche A1 dargestellt; es versteht sich jedoch, dass dies genauso auch für die zweite Oberfläche A2 oder beide erfolgen kann.

Der Plasmabrenner 111 kann dabei beispielsweise so ausgebildet und eingerichtet sein, wie in der veröffentlichten Patentanmeldung EP 3 751 967 A1 beschrieben ist.

Wird ein verzundertes Stahlband mit einem nicht verzunderten Stahlband verschweißt, kann die zu bearbeitende Grenzzone 10 jeweils auf einen Abschnitt des verzunderten Stahlbands begrenzt werden und somit dann beispielsweise einseitig an dem Stumpfstoß anliegen. Sind beide Stahlbänder verzundert, ist die Grenzzone 10 vorteilhaft beidseitig, insbesondere symmetrisch, um den Stumpfstoß herum angeordnet. Im Folgenden wird - ohne eine Beschränkung hierauf - der Fall des Verschweißens zweier verzunderter Stahlbänder näher erläutert.

Bevorzugt erfolgt das Bearbeiten S200 derart, dass die Zunderschicht 3 des ersten Stahlbands 1 und die Zunderschicht 4 des zweiten Stahlbands 2 jeweils mindestens um 30%, bevorzugt zwischen 30% und 90%, bevorzugt zwischen 50% und 80%, besonders bevorzugt zwischen 60% und 75%, verringert werden. Damit gleichbedeutend, oder alternativ, kann das Bearbeiten S200 derart erfolgen, dass die Zunderschicht 3 des ersten Stahlbands 1 und die Zunderschicht 4 des zweiten Stahlbands 2 jeweils um eine Dicke zwischen 0,5 Mikrometer bis 15 Mikrometer verringert werden, bevorzugt um eine Dicke zwischen 1 Mikrometer und 5 Mikrometern.

Überraschend wurde nämlich festgestellt, dass keine vollständige Entfernung der Zunderschichten 3, 4 nötig ist, um die Schweißeigenschaften der Stahlbänder 1, 2 im Bereich der Grenzzone 10 deutlich zu verbessern. Es wird vermutet, ohne dass dies einschränkend verstanden werden soll, dass dies auf oberflächennahe Porositäten der Zunderschichten 3, 4 zurückgeht, durch deren Entfernung sich somit die Schweißeigenschaften verbessern.

Wie in Fig. 2 angedeutet, umfasst die Grenzzone 10 Bereiche beider Stahlbänder 1, 2, die sich an die jeweilige Stahlbandkante 7, 8 anschließen, und wird in ihren Abmessungen durch die Ausdehnung der Bearbeitung durch den (mindestens einen) Plasmabrenner 111 definiert. Bevorzugt ist der (mindestens eine) Plasmabrenner 111 auf den Spalt zwischen den Stahlbandkanten 7, 8 gerichtet und die Grenzzone 10 somit auf den Spalt zentriert.

In einem Schritt S300 werden die erste Stahlbandkante 7 und die zweite Stahlbandkante 8 entlang des Stumpfstoßes von der mindestens einen Oberfläche A1 her mittels eines Schweißkopfs, beispielsweise eines Laser- oder Rollnahtschweißkopfs, verschweißt. Vorteilhaft erfolgt das Bearbeiten S200 der Grenzzone 10 zumindest teilweise gleichzeitig mit dem Verschweißen, wenn auch nicht zwangsläufig an derselben Stelle der Grenzzone.

Fig. 3 beispielsweise illustriert, dass der (mindestens eine) Plasmabrenner 111 und (mindestens) ein Schweißkopf 121 (hier als Laserschweißkopf dargestellt) auf (mindestens) einem gemeinsamen Schlitten 131 angeordnet sind, und sich somit in einem festen Abstand (etwa zwischen 10 cm und 20 cm, beispielsweise 16 cm) voneinander entlang des Spalts zwischen den Stahlbändern 1, 2 über die Grenzzone 10 bewegen.

Hierzu wird der Schlitten 131 zum Spalt zwischen den Stahlbändern 1, 2 bewegt, oder, bevorzugt, die Stahlbänder 1, 2 werden weiter gefördert, bis der Spalt in Linie mit dem linearen Bewegungspfad des Schlittens 131 liegt. Der Plasmabrenner 111 beginnt daraufhin mit dem Bearbeiten S200 der Grenzzone 10 an einem Startpunkt S des Spalts, und der Schlitten 131 bewegt sich entlang des Spalts linear, bis auch der Schweißkopf 121 an dem Startpunkt S anliegt, und mit dem Verschweißen S300 beginnt. Das Bearbeiten S200 der Grenzzone 10 endet an einem Endpunkt E des Spalts, woraufhin sich der Schlitten 131 noch weiter bewegt, bis schließlich auch der Schweißkopf 121 am Endpunkt E anliegt und dort das Schweißen S300 beendet.

Somit kann das Verschweißen S300 der Stahlbänder 1, 2 insbesondere ein gleichförmiges Bewegen S310 des mindestens einen Plasmabrenners 111 und des mindestens einen Schweißkopfs 121 durch Bewegen des gemeinsamen Schlittens 131 umfassen.

Die Stahlbänder 1, 2 können daraufhin im verschweißten Zustand weiter bewegt werden, insbesondere senkrecht zu dem Spalt und parallel zu den Oberflächen A1, A2, während der Schlitten 131 wieder in seine Ausgangslange zurückgefahren werden kann. Die verschweißten Stahlbänder 1, 2 können nun als neues erstes Stahlband 1 betrachtet werden, und ein nachfolgendes weiteres Stahlband als neues zweites Stahlband 2, und das Verfahren kann erneut mit dem Zusammenführen S100 des ersten und des zweiten Stahlbands 1, 2 beginnen. Auf diese Weise kann ein Endlosband hergestellt werden. Das erfindungsgemäße Verfahren ist daher auch als Verfahren zum Herstellen eines Endlos-Stahlbands bezeichenbar.

Das Verschweißen S300 erfolgt zum Beispiel mit einer Geschwindigkeit von mindestens 2 Meter pro Minute, bevorzugt mindestens 7 Meter pro Minute, besonders bevorzugt mindestens 10 Meter pro Minute, beispielsweise mindestens 12 Meter pro Minute. Werden der mindestens einen Plasmabrenner 111 und der mindestens eine Schweißkopf 121 gleichförmig bewegt, etwa weil sie auf demselben Schlitten 131 montiert sind, erfolgt entsprechend auch das Bearbeiten S200 der Grenzzone 10 mit derselben Geschwindigkeit. Alternativ können Plasmabrenner 111 und Schweißkopf 121 auch auf verschiedenen Schlitten angeordnet sein; in diesem Fall läuft der Schlitten mit dem Plasmabrenner 111 voran, und das Bearbeiten S200 erfolgt mit derselben oder mit einer höheren Geschwindigkeit als das Verschweißen S300, sodass das Verschweißen S300 nie aufgrund noch fehlender Bearbeitung der Grenzzone 10 verzögert werden muss.

Damit das Verschweißen S300 vorteilhaft nur bearbeitete Bereiche der Stahlbänder 1, 2 umfasst, also insbesondere keine unbearbeiteten Bereiche von Zunderschichten 3, 4, 5, 6, ist die Grenzzone 10 insbesondere derart ausgebildet, dass sie eine größere Breite aufweist als ein Durchmesser einer von dem Schweißkopf 121 bearbeitbaren Zone. Somit kann beispielsweise ein Durchmesser der Plasmaflamme des Plasmabrenner 111 auf der ersten Oberfläche A1 gleich größer sein als ein Durchmesser eines Laserflecks eines Laserschweißkopfs auf der ersten Oberfläche A1, wobei beide demselben Pfad über die Grenzzone 10 folgen (z.B. auf den Spalt zentriert sind). Möglich ist auch, dass Plasmaflamme und Laserfleck auf der ersten Oberfläche A1 gleich groß sind.

Zwischen dem Bearbeiten S200 einer Stelle der Grenzzone 10 und dem Verschweißen S300 des Stumpfstoßes an derselben Stelle liegt vorteilhaft ein Zeitraum von 120 Sekunden oder weniger, bevorzugt 50 Sekunden oder weniger, insbesondere 20 Sekunden oder weniger, besonders bevorzugt 5 Sekunden oder weniger, beispielsweise 1 Sekunde oder weniger.

Als Einstellgrößen für den Bearbeitungsschritt S200 mit Plasma dienen hauptsächlich der Abstand zwischen einer Düse des Plasmabrenners 111 und der Oberfläche A1 der Stahlbänder A1, S2, und die Stromstärke des Plasmabrenners 111. Je geringer der Abstand der Düse des Plasmabrenners 111 zu der Oberfläche A1 und je höher die Stromstärke eingestellt wird, umso stärker wird die Zunderschichtdicke bearbeitet, insbesondere reduziert. Die Bearbeitungsgeschwindigkeit ist im konkreten Anwendungsfall typischerweise über die Schweißgeschwindigkeit vorgegeben und kann somit in einem nur kleinen Bereich variiert werden. Ziel ist nämlich ein hoher Durchsatz von Stahlbändern 1, 2 durch das Verfahren, und daher ist es unerwünscht, wenn dieser - außer durch das nötige Verschweißen - zusätzlich noch durch die Bearbeitung S200 verringert würde. Eine Optimierung des Bearbeitens S200 ist zudem über die Düsengeometrie möglich.

Es sind vielfältige Alternativen zu den anhand von Fig. 2 und Fig. 3 gezeigten Situationen bzw. Ausführungsformen des Verfahrens möglich.

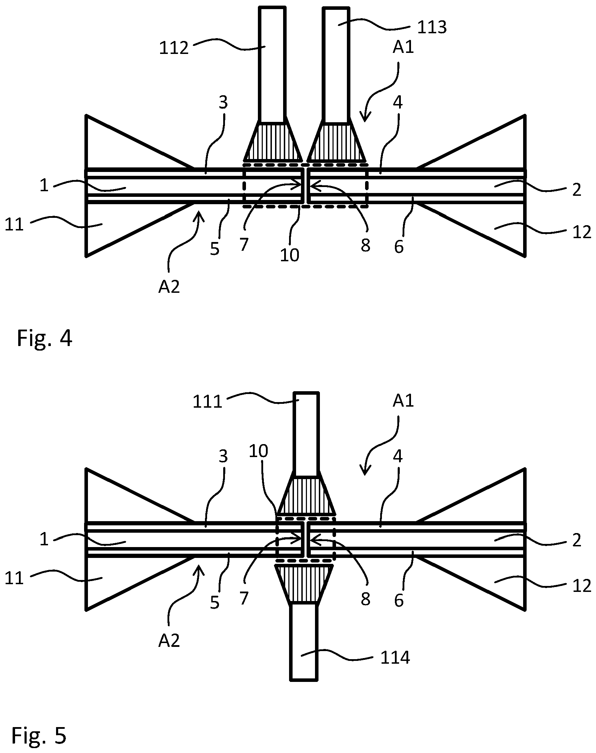

Fig. 4 illustriert eine Variante, in welcher ein erster Plasmabrenner 112 für das Bearbeiten der Grenzzone 10 auf der ersten Oberfläche A1 des ersten Stahlbands 1 vorgesehen ist und verwendet wird, und ein zweiter Plasmabrenner 113 für das Bearbeiten der Grenzzone 10 auf der ersten Oberfläche A1 des zweiten Stahlbands 2 vorgesehen ist und verwendet wird. Der erste und der zweite Plasmabrenner 112, 113 können hierbei vorteilhaft wiederum gleichförmig bewegt werden und insbesondere auf demselben Schlitten montiert sein. In dieser Variante kann beispielsweise eine breitere Grenzzone 10 einfacher ausgebildet und bearbeitet werden als wenn mit einem einzigen Plasmabrenner 111 eine sehr breite Plasmaflamme erzeugt werden müsste.

Die beiden Plasmabrenner 112, 113 können, wie in Fig. 4 schematisch dargestellt ist, senkrecht auf die Oberfläche A1 gerichtet werden, oder sie können geneigt (d. h. mit einem Winkel kleiner als 90°) zu der Oberfläche A1 ausgerichtet werden, insbesondere in einander zugeneigter Ausrichtung.

Diese Variante eignet sich auch beispielsweise dafür, falls die Zunderschichten 3, 4, verschiedener Stahlbänder 1, 2 in unterschiedlicher Weise bearbeitet, also z.B. zu unterschiedlichem Grad in ihrer Schichtdicke verringert werden sollen. Die beiden Plasmabrenner 112, 113 können dann mit unterschiedlicher Leistung und/oder für eine unterschiedliche Dauer eingesetzt werden. Alternativ können sie, insbesondere im Falle zweier gleichartiger verzunderter Stahlbänder 1, 2, auch mit gleicher Leistung, gleicher Dauer etc. eingesetzt werden.

Ist nur eines der beiden Stahlbänder 1, 2 verzundert, kann der entsprechende der beiden Plasmabrenner 112, 113 unbenutzt bleiben oder ganz entfallen, sodass die Grenzzone 10 dann auch nur einerseits des Stumpfstoßes anliegen würde.

Fig. 5 illustriert eine Variante, in welcher ein erster Plasmabrenner 111 für das Bearbeiten der Grenzzone 10 sowohl des ersten Stahlbands 1 als auch des zweiten Stahlbands 2 auf der ersten Oberfläche A1 des ersten Stahlbands 1 vorgesehen ist und verwendet wird, und ein zweiter Plasmabrenner 114 für das Bearbeiten der Grenzzone 10 sowohl des ersten Stahlbands 1 als auch des zweiten Stahlbands 2 auf der zweiten Oberfläche A2 vorgesehen ist und verwendet wird. Der erste und der zweite Plasmabrenner 111, 114 können hierbei vorteilhaft wiederum gleichförmig bewegt werden und insbesondere auf demselben Schlitten montiert sein. Diese Variante ist beispielsweise vorteilhaft, falls auch ein Verschweißen von beiden Oberflächen A1, A2 her erfolgen soll. Aber auch bei einem Durchschweißen des Stumpfstoßes von einer Oberfläche A1, A2 her hat es Vorteile, wenn die auf der anderen Oberfläche A2, A2 vorhandene Zunderschicht erfindungsgemäß bearbeitet, insbesondere verringert wird.

Das Reduzieren der Zunderschichten 3, 4, 5, 6 auf beiden Seiten kann in dem Umfang erfolgen, der im Vorangehenden sowohl in relativen als auch absoluten Werten beschrieben wurde.

Fig. 6 zeigt eine Variante, welche eine Kombination der Varianten aus Fig. 4 und Fig. 5 darstellt, also eine Anordnung und Verwendung von je einem Plasmabrenner 112, 113, 115, 116 für jedes Stahlband 1, 2 und für jede Oberfläche A1, A2, also insgesamt vier. Diese Variante eignet sich beispielsweise, falls die Zunderschichten 3, 4, 5, 6 verschiedener Stahlbänder 1, 2 und/oder an verschiedenen Oberflächen A1, A2 in unterschiedlicher Weise bearbeitet, also z.B. zu unterschiedlichem Grad in ihrer Schichtdicke verringert werden sollen. Im Übrigen können hier auch die mit Bezug auf Fig. 4 beschriebenen Varianten zur Anwendung kommen, wonach, wenn eines der Stahlbänder (einseitig oder beidseitig) unverzundert ist, ein entsprechender Plasmabrenner 112, 113, 115, 116 unbenutzt bleiben oder entfallen kann.

Zurückkehrend zu Fig. 1 kann das Verfahren optional noch weitere Schritte umfassen, die insbesondere darauf gerichtet sind, dass das Verfahren nur dann durchgeführt wird, wenn Eigenschaften der Stahlbänder 1, 2 dies erfordern oder nahelegen.

Hierzu können in einem Schritt S10 Eigenschaften des ersten Stahlbands 1 und/oder des zweiten Stahlbands 2 erfasst werden. Im Folgenden wird davon ausgegangen, dass in dem erfindungsgemäßen Verfahren ein Endlosband erstellt wird, d.h., dass das jeweilige erste Stahlband 1 und das jeweilige zweite Stahlband im Wesentlichen dieselbe Zusammensetzung aufweisen. Für Fälle, in denen die Stahlbänder 1, 2 verschiedene Zusammensetzungen aufweisen, kann für jedes Stahlband 1, 2 separat vorgegangen werden.

In einem Schritt S20 wird, basierend zumindest auf den erfassten Eigenschaften, ein Porositätsmaß P bestimmt, welches (explizit oder implizit) eine Wahrscheinlichkeit für eine Porenbildung beim Verschweißen S300 mit dem Schweißkopf 121 angibt, wobei ein Wert des Porositätsmaßes P umso höher ist, je mehr Kohlenstoff in der Zusammensetzung des ersten Stahlbands 1 bzw. des zweiten Stahlbands 2 enthalten ist und umso geringer ist, je mehr mindestens eines vorbestimmten Elements in der Zusammensetzung enthalten ist. Das mindestens eine vorbestimmte Element stammt aus der folgenden Liste von Elementen: Silicium, Aluminium, Mangan, Niob, Titan, und/oder Chrom.

Insbesondere kann ein Porositätsmaß P beispielsweise wie folgt definiert werden:

$$P = \frac{C}{Si + Al + Mn + Nb + Ti + Cr},$$

wobei die Elementsymbole jeweils für den Massenanteil des jeweiligen Elements in dem Stahlband stehen.

In einem Schritt S30 wird geprüft, ob das bestimmte Porositätsmaß P einen vorbestimmte Schwellwert überschreitet. Für das wie oben definierte Porositätsmaß P kann der vordefinierte Schwellwert beispielsweise 0,1 oder größer sein, etwa 0,13 oder größer, insbesondere 0,15 oder größer, beispielsweise 0,15.

Das Bearbeiten S200 der Grenzzone 10 vor dem Schweißen S300 wird in dieser Variante dann nur durchgeführt, falls das Prüfen S30 ergibt, dass das bestimmte Porositätsmaß P den vorbestimmten Schwellwert überschreitet ("+"-Symbol in Fig. 1). Wird der vorbestimmte Schwellwert nicht überschritten ("-"-Symbol in Fig. 1), wird das Bearbeiten S200 nicht durchgeführt und stattdessen beispielsweise nach dem Schritt S100 direkt mit dem Verschweißen S300 fortgefahren.

Ein niedriglegiertes Stahlband mit der Zusammensetzung 0,04% C, 0,008 % Si, 0,2 % Mn, 0,05 % Al (und dem Rest Fe) weist beispielsweise ein gemäß der obigen Formel berechnetes Porositätsmaß von 0,16 auf und würde somit dazu führen, dass das Bearbeiten S200 zur Porenvermeidung durchgeführt wird ("+"-Symbol in Fig. 1).

Es versteht sich, dass eine analoge Definition mit einem invers definierten Schwellwert und dessen Unterschreiten ebenfalls verwendbar ist; ebenso kann der Fall der Gleichheit des Werts des Porositätsmaßes P mit dem Schwellwert auch bereits das Durchführen des Bearbeitens S200 auslösen.

Fig. 7 zeigt eine schematische Darstellung einer Vorrichtung gemäß einer weiteren Ausführungsform der vorliegenden Erfindung, nämlich einer Vorrichtung 100 zum Verschweißen von Stahlbändern 1, 2. Die Vorrichtung 100 kann dazu eingerichtet sein, das erfindungsgemäße Verfahren durchzuführen, insbesondere gemäß Fig. 1, aber auch davon unabhängig eingesetzt werden. Dementsprechend kann die Vorrichtung 100 gemäß allen in Bezug auf das erfindungsgemäße Verfahren beschriebenen Ausführungsform, Varianten, Optionen, und Weiterbildungen von Ausführungsformen angepasst werden und umgekehrt.

Die Vorrichtung 100 umfasst eine Fördereinrichtung 140, welche dazu eingerichtet ist, eine erste Stahlbandkante 7 eines ersten Stahlbands 1 mit (mindestens) einer Zunderschicht 3, 5 und eine zweite Stahlbandkante 8 eines zweiten Stahlbands 2 mit (mindestens) einer Zunderschicht 4, 6 in einem Stumpfstoß zusammenzuführen. Die Vorrichtung kann hierfür Förderbänder, Walzen, Rollen, Klemmen 11, 12 und dergleichen aufweisen, um Stahlbänder 1, 2 (sowie ein ggfs. daraus hergestelltes Endlosstahlband) zu fördern, zu greifen, zu fixieren, zu führen, und dergleichen mehr.

Die Vorrichtung 100 kann außerdem eine Trenneinrichtung 150 aufweisen, welche dazu eingerichtet ist, ein Stahlbandende des ersten Stahlbands 1 abzutrennen, um die erste Stahlbandkante 7 zu erzeugen, sowie ein Stahlbandende des zweiten Stahlbands 2 abzutrennen, um die zweite Stahlbandkante 8 zu erzeugen, beispielsweise wie dies im Vorangehenden mit Bezug auf die Schritte S120 und S130 beschrieben wurde. Die Trenneinrichtung 150 kann hierzu eine mechanische Schere und/oder einen Schweißtrenner, etwa einen Laserschweißtrenner aufweisen. Es kann vorgesehen sein, dass dieselbe Trenneinrichtung 150 beide Trennungen durchführt und dazwischen die Stahlbänder, etwa durch die Fördereinrichtung 140, bewegt werden, oder dass für jeden der beiden Trennungsschritte S120, S130 eine eigene Trenneinrichtung 150 bereitgestellt ist.

Die Vorrichtung 100 umfasst außerdem mindestens einen Plasmabrenner 111-116, welcher dazu eingerichtet ist, eine Grenzzone 10 um den Stumpfstoß an mindestens einer Oberfläche A1 des ersten Stahlbands 1 und des zweiten Stahlbands 2 zu bearbeiten, insbesondere um die Zunderschichten 3, 4, 5, 6, zumindest an einer Oberfläche A1, A2, zu verringern, beispielsweise wie im Vorangehenden mit Bezug auf den Schritt S200 beschrieben wurde. Die Vorrichtung 100 kann insbesondere einen oder mehrere Plasmabrenner 111-116 aufweisen, welche angeordnet und ausgebildet sind wie im Vorangehenden beschrieben wurden und vor allem gemäß beliebigen der in Fig. 2 bis Fig. 6 dargestellten und mit Bezug darauf beschriebenen Varianten.

Die Vorrichtung 100 umfasst außerdem eine Schweißeinrichtung 120, welche dazu eingerichtet ist, die erste Stahlbandkante 7 und die zweite Stahlbandkante 8 entlang des Stumpfstoßes von der mindestens einen Oberfläche A1 her zu verschweißen. Die Schweißeinrichtung 120 umfasst dabei mindestens einen Schweißkopf 121, kann jedoch auch mehrere Schweißköpfe aufweisen, wie im Vorangehenden ebenfalls bereits erläutert wurde. Beispielsweise kann das Verschweißen S300 des Stumpfstoßes an einer ersten Oberfläche A1 mit einem ersten Schweißkopf 121 (z.B. einem Laserschweißkopf) und an der zweiten, gegenüberliegenden Oberfläche A2 mit einem zweiten Schweißkopf erfolgen. Die Schweißköpfe können an einem gemeinsamen Schlitten 131 angeordnet sein, oder jeweils auf separaten Schlitten. Jeder der Schlitten kann mit dem oder den für die jeweilige Oberfläche A1, A2 vorgesehen Plasmabrenner 111-116 verbunden sein.

Der mindestens eine Plasmabrenner 111-116 und die Schweißeinrichtung sind derart eingerichtet, dass das Bearbeiten S200 der Grenzzone 10 durch den mindestens einen Plasmabrenner 111-116 zumindest teilweise gleichzeitig mit dem Verschweißen S300 durch die Schweißeinrichtung 130 erfolgt. Wie im Vorangehenden bereits beschrieben wurde, kann dies insbesondere durch gleichförmiges Bewegen S310 von Plasmabrenner(n) 111-116 und Schweißkopf/-Schweißköpfen 131 erfolgen.

Die Vorrichtung 100 kann auch eine Steuereinrichtung 160 aufweisen, welche dazu eingerichtet ist, die Verfahrensschritte S10, S20 und S30 durchzuführen, sodass die Vorrichtung 100 dazu eingerichtet sein kann, das Verschweißen S300 nur durchzuführen, wenn die Eigenschaften des ersten und/oder des zweiten Stahlbands 1, 2, bestimmte Bedingungen erfüllen, beispielsweise hinsichtlich ihrer Zusammensetzung oder der Parameter ihres Herstellungsprozesses, wie im Vorangehenden bereits erläutert wurde.

Eine solche Steuereinrichtung 160 kann als eine beliebige Vorrichtung realisiert sein oder werden, welches zum Rechnen, und insbesondere zum Ausführen einer Software, einer App, oder eines Algorithmus in der Lage ist. Die Steuereinrichtung 160 kann beispielsweise mindestens eine Prozessoreinheit aufweisen, z. B. eine Zentralprozessoreinheit (CPU) und/oder eine Graphikprozessoreinheit (GPU) und/oder eine Feldprogrammierbare Logikschaltung (FPGA) und/oder eine anwendungsspezifische integrierte Schaltung (ASIC) und/oder eine Kombination davon. Die Steuereinrichtung 160 kann außerdem einen Arbeitsspeicher aufweisen, welcher mit der mindestens einen Prozessoreinheit operativ gekoppelt ist, sowie einen nicht-flüchtigen Speicher, welcher mit der mindestens einen Prozessoreinheit und dem Arbeitsspeicher operativ gekoppelt ist. Die Steuereinrichtung 160 kann ganz oder vollständig in einem lokalen Gerät und/oder ganz oder vollständig in einem entfernten System implementiert sein wie etwa in einem entfernt angeordneten Server und/oder einer Cloud-Computing-Plattform.

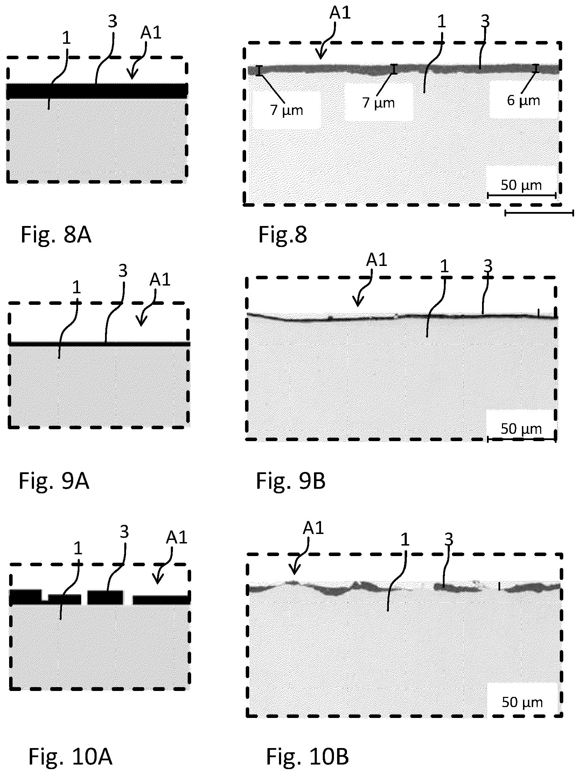

Fig. 8A bis Fig. 10B zeigen schematische (A) sowie experimentell bestimmte (B) Darstellungen von Querschnitten durch Stahlbänder zur Erläuterung des Effekts des erfindungsgemäßen Bearbeitens S200 der Stahlbänder 1, 2.

Fig. 8A und Fig. 8B zeigen jeweils einen Querschnitt durch einen Ausschnitt aus der oberen Hälfte eines verzunderten Stahlbands 1, wobei Fig. 8A eine schematische Darstellung und Fig. 8B eine entsprechende experimentell bestimmte Darstellung ist. Theoretisch ist die Zunderschicht 3 gleichmäßig dick wie in Fig. 8A, tatsächlich sind jedoch sowohl die Oberfläche des Stahlbands 1 an sich als auch die der Zunderschicht 3 uneben, sodass sich verschiedene Durchmesser ergeben, wie in Fig. 8B exemplarisch (jedoch nicht unbedingt maßstabsgetreu) eingezeichnet.

Fig. 9A und Fig. 9B zeigen jeweils den Zustand nach einer Bearbeitung S200 des Stahlbands 1, wobei insbesondere die Zunderschicht 3 deutlich verringert wurde, und zwar im Wesentlichen uniform, beispielsweise überall um 50%-60%, durchschnittlich um 55%.

Fig. 10A und Fig. 10B zeigen den Zustand nach einer Bearbeitung S200 nach einer Variante bzw. unter anderen Voraussetzungen (z.B. einer anderen Zusammensetzung des Stahlbands 1): hier ist die Dicke der Zunderschicht 3 nicht uniform verringert, sondern abschnittsweise. Die durchschnittliche Verringerung beträgt hierbei etwa 35%.

Bezugszeichenliste

| | |
|---|---|
| 1 | erstes Stahlband |
| 2 | zweites Stahlband |
| 3 | erste Zunderschicht des ersten Stahlbands |
| 4 | erste Zunderschicht des zweiten Stahlbands |
| 5 | zweite Zunderschicht des ersten Stahlbands |
| 6 | zweite Zunderschicht des zweiten Stahlbands |
| 7 | erste Stahlbandkante des ersten Stahlbands |
| 8 | zweite Stahlbandkante des zweiten Stahlbands |
| 10 | Grenzzone |
| 11 | Klemme |
| 12 | Klemme |
| 100 | Vorrichtung |

| 111 | Plasmabrenner |
|---|---|
| 112 | Plasmabrenner |
| 113 | Plasmabrenner |
| 114 | Plasmabrenner |
| 115 | Plasmabrenner |
| 116 | Plasmabrenner |
| 120 | Schweißeinrichtung |
| 121 | Schweißkopf |
| 131 | Schlitten |
| 140 | Fördereinrichtung |
| 150 | Trenneinrichtung |
| 160 | Steuereinrichtung |
| A1 | erste Oberfläche |
| A2 | zweite Oberfläche |
| E | Endpunkt |
| S | Startpunkt |
| S10.. S300 | Verfahrensschritte |

**Patentansprüche**

1. Verfahren zum Verschweißen von Stahlbändern (1, 2), umfassend zumindest die Schritte:

   - Zusammenführen (S100), in einem Stumpfstoß, einer ersten Stahlbandkante (7) eines ersten Stahlbands (1) mit einer Zunderschicht (3, 5) und einer zweiten Stahlbandkante (8) eines zweiten Stahlbands (2);
   - Bearbeiten (S200) einer Grenzzone (10) an dem oder um den Stumpfstoß an mindestens einer Oberfläche (A1, A2) des ersten Stahlbands (1) und des zweiten Stahlbands (2) mittels mindestens eines Plasmabrenners (111-116), um die Dicke der Zunderschicht (3, 5,) an der mindestens einen Oberfläche (A1, A2) zu verringern; und
   - Verschweißen (S300) der ersten Stahlbandkante (7) und der zweiten Stahlbandkante (8) entlang des Stumpfstoßes von der mindestens einen Oberfläche (A1, A2) her mittels eines Schweißkopfs (121);

   wobei das Bearbeiten (S200) der Grenzzone (10) zumindest teilweise gleichzeitig mit dem Verschweißen (S300) erfolgt.

2. Verfahren nach Anspruch 1,
   wobei das Bearbeiten (S200) der Grenzzone (10) mit mindestens derselben Geschwindigkeit entlang des Stumpfstoßes durchgeführt wird wie das Verschweißen (S300) und spätestens mit einem Beginn des Verschweißens (S300) beginnt.

3. Verfahren nach Anspruch 2, ferner umfassend:
   ein Bewegen (S310) des mindestens einen Plasmabrenners (111-116) zum Bearbeiten (S200) der Grenzzone (10) und des Schweißkopfs (121) zum Verschweißen (S300) der ersten Stahlbandkante (7) und der zweiten Stahlbandkante (8) gleichförmig mit konstantem Abstand entlang des Stumpfstoßes.

4. Verfahren nach Anspruch 3,
   wobei das Bewegen (S310) des mindestens einen Plasmabrenners (111-116) und des Schweißkopfs (121) durch Bewegen eines gemeinsamen Schlittens (131) erfolgt, auf welchem der mindestens eine Plasmabrenner (111-116) und der Schweißkopf (121) montiert sind.

5. Verfahren nach einem der Ansprüche 1 bis 4,
   wobei das Verschweißen (S300) mit einer Geschwindigkeit von mindestens 2 Meter pro Minute, bevorzugt mindestens 7 Meter pro Minute, besonders bevorzugt mindestens 10 Meter pro Minute, erfolgt.

6. Verfahren nach einem der Ansprüche 1 bis 5,
   wobei das Bearbeiten (S200) der Grenzzone (10) derart erfolgt, dass die Zunderschicht (3, 5) zwischen 30% und 90%, bevorzugt zwischen 50% und 80%, besonders bevorzugt zwischen 60% und 75%, verringert wird.

7. Verfahren nach einem der Ansprüche 1 bis 6,
   wobei das Bearbeiten (S200) der Grenzzone (10) derart erfolgt, dass die Zunderschicht (3, 5) um eine Dicke zwischen 0,5 Mikrometer bis 15 Mikrometer verringert wird, bevorzugt um eine Dicke zwischen 1 Mikrometer und 5 Mikrometern.

**8.** Verfahren nach einem der Ansprüche 1 bis 7,
wobei zwischen dem Bearbeiten (S200) einer Stelle der Grenzzone (10) und deren Verschweißen (S300) ein Zeitraum von 120 Sekunden oder weniger, bevorzugt 50 Sekunden oder weniger, insbesondere 20 Sekunden oder weniger, besonders bevorzugt 5 Sekunden oder weniger, beispielsweise 1 Sekunde oder weniger liegt.

**9.** Verfahren nach einem der Ansprüche 1 bis 8,
wobei die Grenzzone (10) an beiden Oberflächen (A1, A2) des ersten Stahlbands (1) und des zweiten Stahlbands (2) mit jeweils mindestens einem Plasmabrenner (111-116) bearbeitet wird, um die Zunderschicht (3, 4, 5, 6) beidseitig zu verringern.

**10.** Verfahren nach einem der Ansprüche 1 bis 9,
wobei auch das zweite Stahlband (2) eine Zunderschicht (4, 6) aufweist, und das Bearbeiten (S200) der Grenzzone (10) zum Verringern der Dicken der Zunderschichten (3, 4, 5, 6) an der mindestens einen Oberfläche (A1, A2) sowohl des ersten Stahlbands (1) als auch des zweiten Stahlbands (2) erfolgt.

**11.** Verfahren nach einem der Ansprüche 1 bis 10,
wobei die bearbeitbare Grenzzone (10) eine größere Breite aufweist als ein Durchmesser einer von dem Schweißkopf (121) bearbeitbaren Zone.

**12.** Verfahren nach einem der Ansprüche 1 bis 11,
wobei das Verfahren außerdem die Schritte umfasst:

- Abtrennen (S120) eines Stahlbandendes des ersten Stahlbands (1) zum Erzeugen der ersten Stahlbandkante (7); und
- Abtrennen (S130) eines Stahlbandendes des zweiten Stahlbands (2) zum Erzeugen der zweiten Stahlbandkante (8).

**13.** Verfahren nach einem der Ansprüche 1 bis 12,
ferner umfassend:

Erfassen (S10) von Eigenschaften des ersten Stahlbands und des zweiten Stahlbands;
Bestimmen (S20), basierend zumindest auf den erfassten Eigenschaften, eines Porositätsmaßes, welches eine Wahrscheinlichkeit für eine Porenbildung beim Verschweißen (S300) mit dem Schweißkopf (121) angibt, wobei ein Wert des Porositätsmaßes umso höher ist, je mehr Kohlenstoff in der Zusammensetzung des ersten Stahlbands (1) beziehungsweise des zweiten Stahlbands (2) enthalten ist und umso geringer ist, je mehr mindestens eines vorbestimmten Elements in der Zusammensetzung enthalten ist, wobei das mindestens eine vorbestimmte Element Silicium und/oder Aluminium umfasst; und
Prüfen (S30), ob das bestimmte Porositätsmaß einen vorbestimmten Schwellwert überschreitet;
wobei das Bearbeiten (S200) der Grenzzone (10) nur dann durchgeführt wird, wenn das Prüfen (S30) ergibt, dass das bestimmte Porositätsmaß den vorbestimmten Schwellwert überschreitet.

**14.** Verfahren nach einem der Ansprüche 1 bis 13,

wobei ein weiteres Stahlband bereitgestellt wird; und
wobei nach dem Verschweißen des ersten und des zweiten Stahlbands (1, 2) in einer ersten Iteration des Verfahrens ein Ergebnis des Verschweißens als erstes Stahlband (1) für eine weitere Iteration des Verfahrens und das weitere Stahlband als zweites Stahlband (2) für die weitere Iteration des Verfahrens verwendet wird.

**15.** Verfahren nach einem der Ansprüche 1 bis 14,
wobei das erste Stahlband (1) in der Grenzzone (10) mittels mindestens eines ersten Plasmabrenners (111, 112, 115) bearbeitet wird, und das zweite Stahlband (2) in der Grenzzone (10) mittels mindestens eines zweiten Plasmabrenners (112, 113, 116) bearbeitet wird.

**16.** Verfahren nach einem der Ansprüche 1 bis 14,
wobei die gesamte Grenzzone (10) einerseits des ersten Stahlbands (1) und des zweiten Stahlbands (2) mittels eines einzelnen Plasmabrenners (111, 114) bearbeitet wird.

17. Vorrichtung (100) zum Verschweißen von Stahlbändern (1, 2), umfassend:

eine Fördereinrichtung (150), welche dazu eingerichtet ist,
eine erste Stahlbandkante (7) eines ersten Stahlbands (1) mit einer Zunderschicht (3, 5) und eine zweite Stahlbandkante (8) eines zweiten Stahlbands (2) in einem Stumpfstoß zusammenzuführen (S100);
mindestens einen Plasmabrenner (111-116), welcher dazu eingerichtet ist, eine Grenzzone (10) an dem oder um den Stumpfstoß an mindestens einer Oberfläche (A1, A2) des ersten Stahlbands (1) und des zweiten Stahlbands (2) zu bearbeiten (S200), um die Zunderschicht (3, 5) an der mindestens einen Oberfläche (A1, A2) zu verringern; und
eine Schweißeinrichtung, (120) welche dazu eingerichtet ist, die erste Stahlbandkante (7) und die zweite Stahlbandkante (8) entlang des Stumpfstoßes von der mindestens einen Oberfläche (A1, A2) her zu verschweißen (S300);
wobei der mindestens eine Plasmabrenner (111-116) und die Schweißeinrichtung (120) derart eingerichtet sind, dass das Bearbeiten (S200) der Grenzzone (10) durch den mindestens einen Plasmabrenner (111-116) zumindest teilweise gleichzeitig mit dem Verschweißen (S300) durch die Schweißeinrichtung (120) erfolgt.

Fig. 1

111    A1

3    4

1    2

11    5    7    10    8    6    12

A2

Fig. 2

131

121

111    S

1    2

10

E

Fig. 3

Fig. 4

Fig. 5

Fig. 6

Fig. 7

Fig. 8A

Fig. 8

Fig. 9A

Fig. 9B

Fig. 10A

Fig. 10B

**Europäisches Patentamt**
**European Patent Office**
**Office européen des brevets**

# EUROPÄISCHER RECHERCHENBERICHT

**Nummer der Anmeldung**

EP 24 18 8456

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 1 425 526 A (V N I PK I T I ELEKTROSVAROCHN) 18. Februar 1976 (1976-02-18) | 1-3,6-8, 10,12, 14,16,17 | INV. B21B45/06 B23K9/025 |
| Y | * Abbildung 1 * * Seite 1, Zeilen 14-23 * * Seite 1, Zeilen 30-34 * * Seite 2, Zeilen 13,14,21,22 * * Seite 2, Zeilen 15, 16, 24-26 * ----- | 4,5,11 | B23K9/235 B23K10/00  ADD. B23K101/16 B23K103/02 |
| Y | CN 109 014 943 A (UNIV HUAZHONG SCIENCE TECH; WUHAN NRD LASER ENG CO LTD) 18. Dezember 2018 (2018-12-18) | 4,5 | |
| A | * Absätze [0003], [0006] * * Absatz [0033] * * Absatz [0016] * ----- | 10-12,17 | |
| Y | US 2017/120391 A1 (SCHMIT FRANCIS [FR] ET AL) 4. Mai 2017 (2017-05-04) | 4,11 | |
| A | * Absatz [0143]; Abbildung 4 * * Absatz [0089] * * Absatz [0098] * ----- | 10,17 | RECHERCHIERTE SACHGEBIETE (IPC) |
| A | US 5 205 471 A (KINOSE RYOHEI [JP] ET AL) 27. April 1993 (1993-04-27) * Spalte 1, Zeilen 43-46 * * Spalte 6, Zeilen 34-41 * ----- | 7 | B21B B23K |
| A | JP 2004 249305 A (ENSHU SEISAKU KK; KATAYAMA SEIJI) 9. September 2004 (2004-09-09) * Absatz [0031]; Abbildung 3 * ----- | 1,17 | |
| A | US 6 025 570 A (FORTAIN JEAN-MARIE [FR] ET AL) 15. Februar 2000 (2000-02-15) * Spalte 2, Zeile 65 - Spalte 3, Zeile 18 * ----- -/-- | 1,17 | |

Der vorliegende Recherchenbericht wurde für alle Patentansprüche erstellt

| Recherchenort | Abschlußdatum der Recherche | Prüfer |
|---|---|---|
| Den Haag | 7. April 2025 | Jaeger, Hein |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

Seite 1 von 2

**EP 4 678 306 A1**

Europäisches
Patentamt

European
Patent Office

Office européen
des brevets

# EUROPÄISCHER RECHERCHENBERICHT

**Nummer der Anmeldung**

EP 24 18 8456

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2011/315280 A1 (BEHRENS HOLGER [DE] ET AL) 29. Dezember 2011 (2011-12-29) * Absatz [0016] * ----- | 1,17 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 7. April 2025 | Jaeger, Hein |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................

& : Mitglied der gleichen Patentfamilie, übereinstimmendes Dokument

EPO FORM 1503 03.82 (P04C03)

Europäisches
Patentamt

European
Patent Office

Office européen
des brevets

**Nummer der Anmeldung**

EP 24 18 8456

---

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

---

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

**Siehe Ergänzungsblatt B**

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

**1-8, 10-12, 14, 16, 17**

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

Nummer der Anmeldung

EP 24 18 8456

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-8, 10-12, 14, 16, 17

    Verfahren und Vorrichtung zum Verschweißen von Stahlbändern (1, 2) mit einer Zunderschicht (3, 5), wobei die Dicke der Zunderschicht mittels mindestens eines Plasmabrenners (111-116) verringert wird und die Stahlbänder anschließend verschweißt werden, wobei ein Plasmabrenner und ein Schweißkopf (121) auf einem gemeinsamen Schlitten montiert sind und bekannte oder naheliegende Details eines solchen Verfahrens.
    ---

2. Ansprüche: 9, 15

    Verfahren zum Verschweißen von Stahlbändern (1, 2) mit einer Zunderschicht (3, 5), wobei die Dicke der Zunderschicht mittels mindestens eines Plasmabrenners (111-116) verringert wird und die Stahlbänder anschließend verschweißt werden, wobei die Grenzzone (10) an verschiedenen Oberflächen (A1, A2) mittels zwei Plasmabrennern bearbeitet wird.
    ---

3. Anspruch: 13

    Verfahren zum Verschweißen von Stahlbändern (1, 2) mit einer Zunderschicht (3, 5), wobei die Dicke der Zunderschicht mittels mindestens eines Plasmabrenners (111-116) verringert wird und die Stahlbänder anschließend verschweißt werden, wobei die Verringerung der Dicke der Zunderschickt abhängig von einer vorausgehenden Analyse erfolgt.
    ---

**ANHANG ZUM EUROPÄISCHEN RECHERCHENBERICHT
ÜBER DIE EUROPÄISCHE PATENTANMELDUNG NR.**    EP 24 18 8456

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-04-2025

| Im Recherchenbericht angeführtes Patentdokument | Datum der Veröffentlichung | Mitglied(er) der Patentfamilie | Datum der Veröffentlichung |
|---|---|---|---|
| GB 1425526 A | 18-02-1976 | KEINE | |
| CN 109014943 A | 18-12-2018 | KEINE | |
| US 2017120391 A1 | 04-05-2017 | AT 16149 U1 | 15-02-2019 |
| | | AT 16699 U2 | 15-03-2020 |
| | | AT 16700 U2 | 15-03-2020 |
| | | BR 112016024413 A2 | 15-08-2017 |
| | | CA 2946844 A1 | 29-10-2015 |
| | | CA 3026934 A1 | 29-10-2015 |
| | | CA 3171635 A1 | 29-10-2015 |
| | | CN 106232285 A | 14-12-2016 |
| | | DE 202015009465 U1 | 05-01-2018 |
| | | EP 3134225 A1 | 01-03-2017 |
| | | EP 3501724 A1 | 26-06-2019 |
| | | EP 3520952 A2 | 07-08-2019 |
| | | EP 4039403 A1 | 10-08-2022 |
| | | ES 2726225 T3 | 02-10-2019 |
| | | ES 2899940 T3 | 15-03-2022 |
| | | ES 2926276 T3 | 25-10-2022 |
| | | HU E045103 T2 | 30-12-2019 |
| | | HU E056437 T2 | 28-02-2022 |
| | | HU E058691 T2 | 28-09-2022 |
| | | JP 6607868 B2 | 20-11-2019 |
| | | JP 6884737 B2 | 09-06-2021 |
| | | JP 7080377 B2 | 03-06-2022 |
| | | JP 2017514694 A | 08-06-2017 |
| | | JP 2019010678 A | 24-01-2019 |
| | | JP 2021142565 A | 24-09-2021 |
| | | KR 20160144500 A | 16-12-2016 |
| | | KR 20190028562 A | 18-03-2019 |
| | | KR 20210112413 A | 14-09-2021 |
| | | KR 20220110325 A | 05-08-2022 |
| | | MA 39372 A1 | 30-11-2017 |
| | | PL 3134225 T3 | 31-07-2019 |
| | | PL 3501724 T3 | 01-08-2022 |
| | | PL 3520952 T3 | 14-02-2022 |
| | | TR 201906923 T4 | 21-05-2019 |
| | | UA 119457 C2 | 25-06-2019 |
| | | US 2017120391 A1 | 04-05-2017 |
| | | US 2017266761 A1 | 21-09-2017 |
| | | US 2020001402 A1 | 02-01-2020 |
| | | US 2020001403 A1 | 02-01-2020 |
| | | US 2020016697 A1 | 16-01-2020 |
| | | US 2021162550 A1 | 03-06-2021 |
| | | US 2024042556 A1 | 08-02-2024 |

Für nähere Einzelheiten zu diesem Anhang : siehe Amtsblatt des Europäischen Patentamts, Nr.12/82

EPO FORM P0461

Seite 1 von 2

## ANHANG ZUM EUROPÄISCHEN RECHERCHENBERICHT
## ÜBER DIE EUROPÄISCHE PATENTANMELDUNG NR.

EP 24 18 8456

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-04-2025

| Im Recherchenbericht angeführtes Patentdokument | Datum der Veröffentlichung | Mitglied(er) der Patentfamilie | Datum der Veröffentlichung |
|---|---|---|---|
| | | WO 2015162445 A1 | 29-10-2015 |
| | | WO 2015162478 A1 | 29-10-2015 |
| US 5205471 A | 27-04-1993 | DE 69206178 T2 | 11-07-1996 |
| | | EP 0505088 A1 | 23-09-1992 |
| | | JP H04294802 A | 19-10-1992 |
| | | US 5205471 A | 27-04-1993 |
| JP 2004249305 A | 09-09-2004 | KEINE | |
| US 6025570 A | 15-02-2000 | AT E222156 T1 | 15-08-2002 |
| | | AU 736647 B2 | 02-08-2001 |
| | | DE 69807175 T2 | 08-05-2003 |
| | | EP 0924017 A1 | 23-06-1999 |
| | | FR 2772297 A1 | 18-06-1999 |
| | | US 6025570 A | 15-02-2000 |
| US 2011315280 A1 | 29-12-2011 | AU 2009337991 A1 | 18-08-2011 |
| | | BR PI0924152 A2 | 10-02-2016 |
| | | CA 2749962 A1 | 29-07-2010 |
| | | CN 102292172 A | 21-12-2011 |
| | | DE 102009017701 A1 | 29-07-2010 |
| | | EP 2389260 A2 | 30-11-2011 |
| | | JP 2012515843 A | 12-07-2012 |
| | | KR 20110103459 A | 20-09-2011 |
| | | RS 20110328 A1 | 31-08-2012 |
| | | RU 2011134838 A | 27-02-2013 |
| | | TW 201037084 A | 16-10-2010 |
| | | US 2011315280 A1 | 29-12-2011 |
| | | WO 2010083797 A2 | 29-07-2010 |
| | | ZA 201105222 B | 28-03-2012 |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3751967 A1